# EUROPEAN PATENT APPLICATION

(11) **EP 3 546 551 A1**
(43) Date of publication of application: **02.10.2019**
(21) Application number: 17872917.4
(22) Date of filing: 22.11.2017
(51) Int. Cl.: C10M 169/04, C09K 5/04, C10M 101/02, C10M 143/12, C10M 145/14, C10N 20/00, C10N 20/02, C10N 20/04, C10N 30/06, C10N 40/30

(54) **REFRIGERATION OIL AND REFRIGERATION OIL COMPOSITION**

(30) Priority: 25.11.2016 JP 2016229179
(71) Applicant: Idemitsu Kosan Co., Ltd., Chiyoda-ku Tokyo 100-8321 (JP)
(72) Inventor: KANEKO, Masato, Ichihara-shi Chiba 299-0107 (JP)
(74) Representative: Hoffmann Eitle
(86) International application number: PCT/JP2017/041991
(87) International publication number: WO 2018/097173

(57) **Abstract**

The present invention relates to: a refrigerator oil containing (A) a mineral oil having a kinematic viscosity at 40°C of 20.00 mm²/s or less, and (B) one or more selected from the group consisting of a vinyl-based polymer, an olefin-based polymer, a diene-based polymer, and copolymers corresponding to these polymers, each having a weight average molecular weight (Mw) of 300 or more and 500,000 or less, a composition for refrigerator containing the refrigerator oil, and a method for producing the refrigerator oil.

## Description

### Technical Field

The present invention relates to a refrigerator oil, a composition for refrigerator containing the refrigerator oil, and a method for producing the refrigerator oil.

### Background Art

Refrigerator systems have a structure in which a mixture of a refrigerant and a refrigerator oil (hereinafter, the mixture is also referred to as "refrigerator oil composition") is circulated within a closed system, and the refrigerator oil is required to have compatibility with the refrigerant, stability, and lubricating performance.

For example, PTL 1 discloses a refrigerator oil containing, as a main component, at least one selected from a mineral oil, a synthetic alicyclic hydrocarbon compound and a synthetic aromatic hydrocarbon compound, containing a base oil having a kinematic viscosity at 40°C of 1 to 8 mm²/s, and applied to a refrigerator system having a slide member formed of a specific material.

Also for example, PTL 2 discloses a refrigerator oil composition containing, as a main component, a specific ether compound and containing a base oil having a kinematic viscosity at 40°C of 1 to 8 mm²/s.

On the other hand, as a refrigerant, a hydrofluorocarbon (HFC) has become used in place of a hydrochlorofluorocarbon (HCFC) having a high environmental load. Among HFCs, a saturated hydrofluorocarbon (saturated HFC), such as R32 (difluoroethane) and R410A (a mixture of difluoroethane and pentafluoroethane) is frequently used.

Recently, in addition, further as a refrigerant suitable for environmental protection, so-called native refrigerants such as hydrocarbon refrigerants, ammonia and carbon dioxide have become specifically noted.

In the field of refrigerator systems, demand for energy saving is increasing year by year, and it has become desired to increase a coefficient of performance (COP). Accordingly, for refrigerator oils, it has become desired to improve the lubricity in slide members of refrigerator systems for improving COP.

### Citation List

### Patent Literature

PTL 1: WO2007/058072
PTL 2: JP 2007-137953 A

### Summary of Invention

### Technical Problem

As described above, in the field of refrigerator systems, a demand for energy saving is high and, for example, in the case of refrigerator systems for refrigerators, the viscosity of a refrigerator oil is lowered to VG 32, 22, 15 or 10 to improve the energy saving performance thereof, but a refrigerator oil having a further lower viscosity is desired.

For example, in refrigerator oils for hydrocarbon refrigerants (HC refrigerants), a mineral oil is used and, as mentioned above, energy saving by viscosity reduction has been discussed, and heretofore refrigerator oils having a different viscosity have been used, but a further more lowered viscosity is desired, and in the case of further reduction in viscosity, a problem occurs that the lubricity of a refrigerator oil worsens.

A refrigerator oil is mixed with a refrigerant in use thereof, and the operation temperature range thereof is broad. Under the situation where a refrigerator oil having a more lowered viscosity is used, a possibility that the slide members in refrigerator systems may be in a boundary lubrication condition at the start of refrigerator systems will have to be taken into consideration.

Consequently, development of a refrigerator oil more excellent in lubricity is desired.

The present invention has been made in consideration of the above-mentioned problems, and an object of the present invention is to provide a refrigerator oil excellent in lubricity.

### Solution to Problem

As a result of assiduous studies, the present inventors have found that a refrigerator oil containing a specific mineral oil as component (A) and one or more selected from the group consisting of a vinyl-based polymer having a specific weight average molecular weight (Mw), an olefin-based polymer, and copolymers corresponding these polymers as component (B) can solve the above-mentioned problems. The present invention has been completed based on these findings. Specifically, according to aspects of the present invention, there are provided [1] to [3] mentioned below.
[1] A refrigerator oil containing:
   (A) a mineral oil having a kinematic viscosity at 40°C (hereinafter simply referred to as "40°C kinematic viscosity") of 20.00 mm²/s or less, and
   (B) one or more selected from the group consisting of a vinyl-based polymer, an olefin-based polymer, a diene-based polymer, and copolymers corresponding to these polymers, each having a weight average molecular weight (Mw) of 300 or more and 500,000 or less.
[2] A composition for refrigerator containing a refrigerant and the refrigerator oil according to the above [1].
[3] A method for producing a refrigerator oil, including blending at least:
   (B) one or more selected from the group consisting of a vinyl-based polymer, an olefin-based polymer, a diene-based polymer, and copolymers corresponding to these polymers, each having a weight average molecular weight (Mw) of 300 or more and 500,000 or less, in
   (A) a mineral oil having a 40°C kinematic viscosity of 20.00 mm²/s or less, so as to obtain a refrigerator oil.
[4] A refrigerator filled with the refrigerator oil according to the above [1] or the refrigerator oil composition according to the above [2].
[5] A refrigerator system for freezers or refrigerators filled with the refrigerator oil according to the above [1] or the refrigerator oil composition according to the above [2].

### Advantageous Effects of Invention

There can be provided a refrigerator oil excellent in lubricity.

### Description of Embodiments

Hereinunder the present invention is described with reference to embodiments thereof.

### [Refrigerator Oil]

The refrigerator oil according to one aspect of the present invention (hereinafter also referred to simply as "refrigerator oil") contains a mineral oil having a 40°C kinematic viscosity of 20.00 mm²/s or less as component (A), and one or more selected from the group consisting of a vinyl-based polymer, an olefin-based polymer, a diene-based polymer, and copolymers corresponding to these polymers, as component (B), and the compound (B) has a weight average molecular weight (Mw) of 300 or more and 500,000 or less.

Hereinunder, the components contained in the refrigerator oil are described.

### <Component (A): mineral oil having a 40°C kinematic viscosity of 20.00 mm²/s or less>

The refrigerator oil contains a mineral oil having a 40°C kinematic viscosity of 20.00 mm²/s or less as component (A) (hereinafter also referred to simply as "component (A)").

Examples of the mineral oil include oils prepared by purification of lubricating oil fractions obtained by reduced-pressure distillation of atmospheric residues obtained by atmospheric distillation of paraffin-base mineral oils, intermediate-base mineral oils or naphthene-base mineral oils or by atmospheric distillation of crude oils, according to one or more treatments of solvent deasphalting, solvent extraction, hydrocracking, solvent dewaxing, catalytic dewaxing or hydrorefining, oils obtained by isomerization of mineral oil wax, and oils obtained by isomerization of GTL WAX (gas-to-liquid wax) produced through Fischer-Tropsch synthesis.

One kind alone of these may be used, or two or more kinds thereof may be used in combination.

The mineral oil preferably has a 40°C kinematic viscosity of 0.10 mm²/s or more and 10.00 mm²/s or less. When the 40°C kinematic viscosity is 10.00 mm²/s or less, the mineral oil is preferred in point of energy saving performance. When the 40°C kinematic viscosity is 0.10 mm²/s or more, the mineral oil is preferred, for example, from the viewpoint that the resultant refrigerator oil can reduce a risk of leaking out between lubricated members.

From these viewpoints, the 40°C kinematic viscosity of the mineral oil is preferably 0.30 mm²/s or more, more preferably 0.50 mm²/s or more, even more preferably 1.00 mm²/s or more, further more preferably 1.50 mm²/s or more, even further more preferably 2.00 mm²/s or more, and is also more preferably 8.00 mm²/s or less, even more preferably 6.00 mm²/s or less, further more preferably 5.00 mm²/s or less, and still further more preferably 4.50 mm²/s or less.

In this description, the value of the 40°C kinematic viscosity is a value measured according to the method described in the section of Examples given hereinunder.

Also preferably, the sulfur content of the component (A) is 500 ppm by mass or less. The sulfur content is a value measured according to JIS K 2541-6. The component (A) having a sulfur content of 300 ppm by mass or less secures good oxidation stability of the resultant refrigerator oil, and is more favorable from the viewpoint of preventing acid value increase and sludge formation. From such viewpoints, the sulfur content is more preferably 100 ppm by mass or less, even more preferably 50 ppm by mass or less, further more preferably 20 ppm by mass or less.

Preferably, the refrigerator oil contains the component (A) as a main component. Here, the wording that the refrigerator oil contains the component (A) as a main component means that the refrigerator oil contains the component (A) in a ratio of 50% by mass or more relative to the total amount of the refrigerator oil. With that, the content of the component (A) is more preferably 75% by mass or more relative to the total amount of the refrigerator oil, even more preferably 80% by mass or more, further more preferably 83% by mass or more, still further more preferably 85% by mass or more, and is preferably 99% by mass or less, more preferably 98% by mass or less, even more preferably 97% by mass or less, and further more preferably 96% by mass or less.

### <Component (B): one or more selected from the group consisting of a vinyl-based polymer, an olefin-based polymer, a diene-based polymer, and copolymers corresponding to these polymers>

The refrigerator oil further contains one or more selected from the group consisting of a vinyl-based polymer, an olefin-based polymer, a diene-based polymer, and copolymers corresponding these polymers as component (B) (hereinafter also simply referred to as "component (B)"), and the weight average molecular weight (Mw) of the component (B) is 300 or more and 500,000 or less.

Containing the component (B) that satisfies the weight average molecular weight (Mw), the resulting refrigerator oil is excellent in lubricity.

Here, when the refrigerator oil contains 2 or more kinds of polymers as the component (B), the weight average molecular weight (Mw) of the component (B) of 300 or more and 500,000 or less is the weight average molecular weight of each polymer.

From the viewpoint of lubricity, the weight average molecular weight (Mw) of the component (B) is preferably 500 or more, more preferably 1,000 or more, even more preferably 1,500 or more, and is preferably 50,000 or less, more preferably 10,000 or less, even more preferably 5,000 or less, still more preferably 3,000 or less, and further more preferably 2,000 or less.

Also preferably, the number average molecular weight (Mn) of the component (B) is preferably 250 or more, more preferably 500 or more, even more preferably 800 or more, still more preferably 1,000 or more, and is preferably 30,000 or less, more preferably 10,000 or less, even more preferably 5,000 or less, still more preferably 3,000 or less, and further more preferably 2,000 or less.

In this description, the values of the weight average molecular weight (Mw) and the number average molecular weight (Mn) of the component (B) are values measured according to the method described in the section of Examples given hereinunder.

### (Vinyl-based Polymer)

The vinyl-based polymer is a polymer having a structure derived from a vinyl group-having monomer in the molecular structure thereof, and is preferably one or more kinds selected from the group consisting of a polyalkyl (meth)acrylate-based polymer (hereinafter the simple expression "alkyl (meth)acrylate" indicates "alkyl methacrylate" and/or "alkyl acrylate"), and a styrene-based polymer, more preferably a poly(meth)acrylate-based polymer.

Examples of the polyalkyl (meth)acrylate-based polymer include polymers having a structure derived from a monomer represented by the following general formula (b-1).

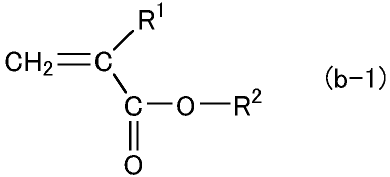

In the general formula (b-1), R¹ represents a hydrogen atom or a methyl group, and is preferably a methyl group. R² represents a hydrogen atom or an alkyl group having 1 to 18 carbon atoms.

The alkyl group having 1 to 18 carbon atoms that R² represents may be linear, branched or cyclic, and includes a methyl group, an ethyl group, an n-propyl group, an isopropyl group, various butyl groups, various pentyl groups, various hexyl groups, various heptyl groups, various octyl groups, various nonyl groups, various decyl group, various undecyl groups, various dodecyl groups, various tridecyl groups, various tetradecyl groups, various pentadecyl groups, various hexadecyl groups, various heptadecyl groups, and various octadecyl groups. "Various" indicates a "linear, branched or cyclic" alkyl group. For example, "various butyl groups" indicate various butyl groups such as "an n-butyl group, a sec-butyl group, an isobutyl group, a tert-butyl group and a cyclobutyl group".

The polyalkyl (meth)acrylate-based polymer includes a polyalkyl (meth)acrylate, and a copolymer of an alkyl (meth)acrylate and a dispersive polar monomer.

Examples of the alkyl (meth)acrylate include methyl (meth)acrylate, ethyl (meth)acrylate, propyl (meth)acrylate, butyl (meth)acrylate, pentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, dodecyl (meth)acrylate, tetradecyl (meth)acrylate, hexadecyl (meth)acrylate, and octadecyl (meth)acrylate. The alkyl group that these compounds have may be linear or branched. Examples of the linear alkyl group include an isobutyl group, a tert-butyl group, and a 2-ethyl-hexyl group.

In the poly(meth)acrylate-based polymer, the content of the monomer represented by the general formula (b-1) is preferably 80 mol% or more among the total amount of the monomer units constituting the poly(meth)acrylate-based polymer, more preferably 90 mol% or more, even more preferably 95 mol% or more, further more preferably 98 mol% or more, and is preferably 100 mol% or less.

Examples of the monomer having a polar group (the polar monomer) include a carboxylic acid compound such as maleic anhydride, methacrylic acid, crotonic acid and itaconic acid; a vinyl group-having nitrogen-containing compound such as diethylaminoethyl methacrylate, 2-methyl-5-vinylpyridine and N-vinylpyrrolidone; and a nitrile group-having compound such as acrylonitrile, and methacrylonitrile. The nitrogen-containing compound is preferred.

In the case where the copolymer of an alkyl (meth)acrylate and a dispersive polar monomer has the polar monomer, the content of the polar monomer is preferably 0.1% by mass or more in the total amount of the monomer units constituting the copolymer, more preferably 1% by mass or more, and is preferably 20% by mass or less, more preferably 10% by mass or less, even more preferably 5% by mass or less.

The vinyl-based polymer having a structure derived from the above-mentioned, nitrogen-containing compound is not limited to those produced through polymerization of the above-mentioned monomers but includes, for example, any others produced through copolymerization of an alkyl (meth)acrylate and the above-mentioned carboxylic acid compound followed by amidation or imidation with a (poly)amine compound.

Examples of the styrene-based polymer include polymers having a structure derived from a monomer represented by the following general formula (b-2).

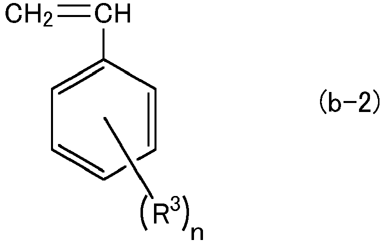

In the general formula (b-2), R³ represents a hydrogen atom or a linear or branched alkyl group having 1 or more and 12 or less carbon atoms, and n represents an integer of 1 or more and 5 or less.

The styrene-based polymer includes a polystyrene, a polyalkylstyrene, and a copolymer of styrene an alkylstyrene.

In the styrene-based polymer, the content of the monomer represented by the general formula (b-2) is preferably 80 mol% or more in the total amount of the monomer units constituting the styrene-based polymer, more preferably 90 mol% or more, even more preferably 95 mol% or more, still more preferably 98 mol% or more, and preferably 100 mol% or less.

Examples of the other monomer having vinyl group include an unsaturated monocarboxylate having an alkyl group having 1 or more and 20 or less carbon atoms, such as methyl crotonate, ethyl crotonate, butyl crotonate, octyl crotonate, and dodecyl crotonate; and an alkyl ester of an unsaturated polycarboxylic acid such as dibutyl maleate, dioctyl maleate, dilauryl maleate, dibutyl fumarate, dioctyl fumarate and dilauryl fumarate.

In the case of, for example, a polymer having a structure derived from plural monomers in one and the same molecule and in the case where the structure that occupies the largest ratio (molar ratio) in the molecular structure is a structure derived from the monomer represented by the general formula (b-1), the polymer is referred to as a poly(meth)acrylate-based polymer. On the other hand, in the case where the structure that occupies the largest ratio (molar ratio) in the molecular structure is a structure derived from the monomer represented by the general formula (b-2), the polymer is referred to as a styrene-based polymer.

For example, a polymer having both a structure derived from the monomer represented by the general formula (b-1) and a structure derived from the monomer represented by the general formula (b-2) in one and the same molecule, and represented by a molecular structure that contains a structure derived from the monomer represented by the general formula (b-1) in a ratio of 50 mol% or more is a poly(meth)acrylate-based polymer.

### (Olefin-based Polymer)

The olefin-based polymer is a polymer having a structure derived from an olefin-based hydrocarbon monomer in the molecular structure.

Examples of the olefin-based hydrocarbon monomer include ethylene, propylene, isobutylene, 1-butene, 1-pentene, 1-hexene, 1-octene, 1-decene, and 1-dodecene.

The olefin-based polymer is preferably an ethylene-α-olefin copolymer such as an ethylene-propylene copolymer; polyisobutylene, and polybutene.

### (Diene-based Polymer)

The diene-based polymer is a polymer having a structure derived from a diene-based monomer in the molecular structure.

Examples of the diene-based monomer include butadiene, and isoprene.

Examples of the diene-based polymer include a polybutadiene, a polybutadiene hydride, a polyisoprene, a polyisoprene hydride, and a copolymer thereof.

A copolymer of one or more selected from the group consisting of the vinyl-based polymer, the olefin-based polymer and the diene-based polymer may be one having a structure derived from the monomer that constitutes the polymer, and may be a random copolymer or a block copolymer.

Examples of the polymer of the type include a styrene-diene copolymer such as a styrene-butadiene copolymer, a styrene-isoprene copolymer, and a styrene-butadiene-isoprene copolymer, and a hydride thereof; a copolymer of styrene and a carboxylic acid compound and/or a carboxylate compound such as a styrene-maleic anhydride ester copolymer; a copolymer of isobutylene and a carboxylic acid compound and/or a carboxylate compound such as an isobutylene-maleic anhydride ester copolymer; and a copolymer of an alkyl (meth)acrylate and an α-olefin such as a copolymer of an alkyl (meth)acrylate and 1-decene. Among these, a copolymer of an alkyl (meth)acrylate and an α-olefin such as a copolymer of an alkyl (meth)acrylate and 1-decene is preferred. Examples of commercial products thereof include "VISCOBASE (registered trademark) 11-570", "VISCOBASE (registered trademark) 11-572" and "VISCOBASE (registered trademark) 11-574" by EVONIK INDUSTRIES.

The content of the component (B) is preferably 1% by mass or more and 50% by mass or less relative to the total amount of the refrigerator oil. When the content of the component (B) is 1% by mass or more, a refrigerator oil having excellent lubricity can be obtained. When the content of the component (B) is 50% by mass or less, a refrigerator oil having excellent lubricity and having a lower pour point can be obtained.

The content of the component (B) is the amount of the component (B) itself not containing a diluent oil and others.

From the viewpoint of obtaining a refrigerator oil having a lower pour point in addition to having excellent lubricity, the content of the component (B) is more preferably 2% by mass or more relative to the total amount of the refrigerator oil, even more preferably 3% by mass or more, still more preferably 4% by mass or more, and is more preferably 40% by mass or less, even more preferably 25% by mass or less, still more preferably 18% by mass or less, and further more preferably 15% by mass or less.

As described above, one kind alone may be used as the component (B) or two or more kinds may be used in combination. In the case where two or more kinds are used in combination as the component (B), the content of the component (B) means the total content of those kinds of the component (B).

The total content of the components (A) and (B) is preferably 51% by mass or more relative to the total amount of the refrigerator oil, more preferably 75% by mass or more, even more preferably 85% by mass or more, still more preferably 95% by mass or more, and further more preferably 99% by mass or more, and is preferably 100% by mass or less. As so described above, in the case where the refrigerator oil does not contain any additive, the total content of the components (A) and (B) is 100% by mass relative to the total amount of the refrigerator oil.

### <Other Additives>

The refrigerator oil may further contain, in addition to the above-mentioned components (A) and (B), one or more various additives (other additives) such as an oil except the above-mentioned mineral oil, an antioxidant, an extreme pressure agent, an acid scavenger, an anti-foaming agent,, an oiliness agent, an oxygen scavenger, a metal deactivator, and a rust inhibitor. In the case where the refrigerator oil contains other additives, the total content of the other additives is preferably 15% by mass or less relative to the total amount of the refrigerator oil, more preferably 5% by mass or less, and is preferably 0% by mass or more.

Examples of the other oil than the mineral oil include a synthetic oil, and are preferably at least one selected from the group consisting of an oxygen-containing organic compound, an aromatic hydrocarbon compound and an α-olefin oligomer hydride, more preferably an oxygen-containing organic compound.

The oxygen-containing organic compound includes a compound containing an ether group, a ketone group, an ester group, a carbonate group or the like in the molecule, and further a compound containing a hetero atom (e.g., sulfur atom, fluorine atom, chlorine atom, silicon atom, nitrogen atom) along with any of such groups.

Examples of the oxygen-containing organic compound include an aliphatic monoester, an aliphatic diester, an aliphatic triester, an aliphatic monoether, an aliphatic diether, an aliphatic triether, an aliphatic tetraether, a polyoxyalkylene glycol compound, a polyvinyl ether compound, a polyol ester compound, and a copolymer of a polyoxyalkylene glycol or a monoether thereof and a polyvinyl ether.

Examples of the aromatic hydrocarbon compound include a compound containing a structure of a benzene ring or a naphthalene ring in the molecule, and further a compound containing a hetero atom (e.g., oxygen atom, sulfur atom, fluorine atom, chlorine atom, silicon atom, nitrogen atom) along with a structure of a benzene ring or a naphthalene ring. More specifically, the compound includes an alkylbenzene compound and an alkylnaphthalene compound, and in the alkylbenzene compound (hereinafter also abbreviated as "AB") and the alkylnaphthalene compound (hereinafter also abbreviated as "AN), the alkyl chain moiety may be linear or branched.

The α-olefin oligomer hydride is preferably one produced by hydrogenating an α-olefin oligomer having 5 or more and 20 or less carbon atoms, more preferably one produced by hydrogenating an α-olefin oligomer having 5 or more and 20 or less carbon atoms obtained using a metallocene catalyst.

Examples of the α-olefin having 5 or more and 20 or less carbon atoms include 1-hexene, 1-octene, 1-decene, 1-dodecene, 1-tetradecene, 1-hexadecene, and 1-octadecene. Among these, 1-hexene, 1-octene, 1-decene and 1-dodecene are preferred. One kind along of these may be used, or two or more kinds thereof may be used in combination.

Examples of the antioxidant include a phenol-based antioxidant, such as 2,6-di-tert-butyl-4-methylphenol, 2,6-di-tert-butyl-4-ethylphenol, and 2,2'-methylenebis(4-methyl-6-tert-butylphenol); and an amine type antioxidant, such as phenyl-α-naphthylamine, and N,N'-di-phenyl-p-phenylenediamine, and a phenol-based antioxidant is preferred. From the standpoints of effects and economy, the content of the antioxidant is preferably 0.01% by mass or more relative to the total amount of the refrigerator oil, more preferably 0.05% by mass, and is preferably 5% by mass or less, more preferably 3% by mass or less.

Examples of the extreme pressure agent include a phosphorus-containing extreme pressure agent including phosphates, acid phosphates, phosphites, acid phosphites and amine salts thereof.

The phosphorus-containing extreme pressure agent has one phosphorus atom in the molecule thereof, examples thereof include tricresyl phosphate, trithiophenyl phosphate, tri(nonylphenyl) phosphite, dioleylhydrogen phosphite, and 2-ethylhexyldiphenyl phosphite.

As other extreme pressure agents, metal carboxylates are also usable. Metal carboxylates as referred to herein include metal salts of carboxylic acids having 3 or more and 60 or less carbon atoms, more preferably metal salts of fatty acids having 3 or more and 30 or less carbon atoms, even more preferably metal salts of fatty acids having 12 or more and 30 or less carbon atoms. Also usable are metal salts of dimer acids or trimer acids of the above-mentioned fatty acids, as well as metal salts of dicarboxylic acids having 3 or more and 30 or less carbon atoms. As metal salts of carboxylic acids, preferred are metal salts of fatty acids having 12 or more and 30 or less carbon atoms and metal salts of dicarboxylic acids having 3 to 30 carbon atoms. The metal to constitute the metal salts is preferably an alkali metal or an alkaline earth metal and is more preferably an alkali metal.

In addition to the above-mentioned extreme pressure agents, other examples thereof also usable herein are sulfur-containing extreme pressure agents such as sulfurized oils and fats, sulfurized fatty acids, sulfurized esters, sulfurized olefins, dihydrocarbyl polysulfides, thiocarbamates, thioterpenes, dialkylthio dipropionates.

One alone of these extreme pressure agents may be used or two or more thereof may be used in combination.

The content of the extreme pressure agent is, from the viewpoint of lubricity and stability, preferably 0.001% by mass or more relative to the total amount of the refrigerator oil, more preferably 0.005% by mass or more, and is preferably 5% by mass or less, more preferably 3% by mass or less.

Examples of the acid scavenger include an epoxy compound, such as phenyl glycidyl ether, an alkyl glycidyl ether, an alkylene glycol glycidyl ether, cyclohexene oxide, an α-olefin oxide, and an epoxidized soybean oil. Above all, from the standpoint of compatibility, phenyl glycidyl ether, an alkyl glycidyl ether, an alkylene glycol glycidyl ether, cyclohexene oxide, and an α-olefin oxide are preferred.

The alkyl group in the alkyl glycidyl ether and the alkylene group in the alkylene glycol glycidyl ether may be branched groups, and the number of carbon atoms thereof is typically 3 to 30, preferably 4 to 24, and more preferably 6 to 16. One example is 2-ethylhexyl glycidyl ether. The α-olefin oxide is one having a total number of carbon atoms of generally 4 to 50, preferably 4 to 24, and more preferably 6 to 16. The acid scavenger may be used solely, or may be used in combination of two or more thereof.

The content of the acid scavenger is, from the viewpoint of effects and prevention of sludge generation, preferably 0.005% by mass or more, more preferably 0.05% by mass or more, and is preferably 5% by mass or less, more preferably 3% by mass or less.

In the present embodiment, by incorporating the acid scavenger, the stability of the refrigerator oil can be improved.

Examples of the anti-foaming agent include a silicone-based anti-foaming agent, and a fluorinated silicone-based anti-foaming agent. The content of the anti-foaming agent is preferably 0.005% by mass or more relative to the total amount of the refrigerator oil, more preferably 0.01% by mass or more, and is preferably 2% by mass or less, more preferably 1% by mass or less.

Examples of the oiliness agent include an aliphatic saturated or unsaturated monocarboxylic acid, such as stearic acid, and oleic acid; a polymerized fatty acid, such as a dimer acid, and a hydrogenated dimer acid; a hydroxy fatty acid, such as ricinoleic acid, and 12-hydroxystearic acid; an aliphatic saturated or unsaturated monoalcohol, such as lauryl alcohol, and oleyl alcohol; an aliphatic saturated or unsaturated monoamine, such as stearylamine, and oleylamine; an aliphatic saturated or unsaturated monocarboxylic acid amide, such as lauric acid amide, and oleic acid amide; a partial ester of a polyhydric alcohol, such as glycerin or sorbitol and an aliphatic saturated or unsaturated monocarboxylic acid.

One alone of these may be used, or two or more kinds thereof may be used in combination. The content of the oiliness agent is preferably 0.01% by mass or more relative to the total amount of the refrigerator oil, more preferably 0.1% by mass or more, and is preferably 10% by mass or less, more preferably 5% by mass or less.

Examples of the oxygen scavenger include a sulfur-containing aromatic compound, such as 4,4'-thiobis(3-methyl-6-t-butylphenol), diphenyl sulfide, dioctyldiphenyl sulfide, a dialkyldiphenylene sulfide, benzothiophene, dibenzothiophene, phenothiazine, benzothiapyrane, thiapyrane, thianthrene, dibenzothiapyrane, and diphenylene disulfide; an aliphatic unsaturated compound, such as various olefins, dienes, and trienes; and a terpene compound having a double bond.

Examples of the metal deactivator include an N-[N,N'-dialkyl(alkyl group having 3 to 12 carbon atoms)aminomethyl]triazole.

Examples of the rust inhibitor include a metal sulfonate, an aliphatic amine compound, an organic phosphite ester, an organic phosphate ester, an organic sulfonic acid metal salt, an organic phosphoric acid metal salt, an alkenyl succinate ester, and a polyhydric alcohol ester.

The refrigerator oil may further contain various other known additives than those mentioned above within the range where the object of the present invention is not impaired.

### <Properties of Refrigerator Oil>

The 40°C kinematic viscosity of the refrigerator oil is, from the viewpoint of preventing the refrigerator oil from leaking out between lubricated members, preferably 0.40 mm²/s or more, more preferably 1.00 mm²/s or more, even more preferably 1.50 mm²/s or more, further more preferably 2.00 mm²/s or more, and especially more preferably 2.50 mm²/s or more. The 40°C kinematic viscosity of the refrigerator oil is, from the viewpoint of energy saving, preferably 15.00 mm²/s or less, more preferably 10.50 mm²/s or less, even more preferably 8.00 mm²/s or less, further more preferably 7.00 mm²/s or less, further more preferably 6.00 mm²/s or less, and especially more preferably 5.50 mm²/s or less.

The kinematic viscosity at 100°C (hereinafter also simply referred to as "100°C kinematic viscosity") of the refrigerator oil is, from the same viewpoint as that for the preferred range of the 40°C kinematic viscosity thereof mentioned hereinabove, preferably 0.30 mm²/s or more, more preferably 0.50 mm²/s or more, even more preferably 0.80 mm²/s or more, still more preferably 1.00 mm²/s or more, and the 100°C kinematic viscosity is preferably 5.00 mm²/s or less, more preferably 4.00 mm²/s or less, even more preferably 3.00 mm²/s or less, still more preferably 2.50 mm²/s or less, and further more preferably 2.00 mm²/s or less.

The friction coefficient, as measured according to the method described in the section of Examples given hereinunder, of the refrigerator oil is, from the viewpoint of attaining excellent lubricity, preferably 0.350 or less, more preferably 0.320 or less, even more preferably 0.300 or less, still more preferably 0.280 or less, and further more preferably 0.260 or less.

The pour point of the refrigerator oil is, from the viewpoint of making it possible to use the refrigerator oil at a lower temperature, preferably -37.5°C or lower, more preferably -40.0°C or lower, even more preferably -45.0°C or lower, still more preferably -47.5°C or lower, and further more preferably -50.0°C or lower.

The refrigerator oil is used in refrigerant environments and, specifically, this is mixed with a refrigerant to be mentioned below, and is used in refrigerator systems. Specifically, the refrigerator oil is used in a refrigerator system in the form of a composition for refrigerator therein as described later. In addition, the refrigerator oil is excellent in lubricity and is more favorably used as a refrigerator oil for freezers or refrigerators. In addition, the refrigerator oil is excellent in lubricity, especially in lubricity in a boundary lubrication condition, though using a mineral oil having a low viscosity, and is further favorably used in refrigerator systems using a hydrocarbon-based refrigerant, and is still further favorably used in freezers or refrigerators using a hydrocarbon-based refrigerant.

### [Method for Producing Refrigerator Oil]

A method for producing the refrigerator oil of one aspect of the present invention is for producing a refrigerator oil by blending at least one or more selected from the group consisting of a vinyl-based polymer, an olefin-based polymer, a diene-based polymer, and copolymers corresponding to these polymers, as the component (B), in a mineral oil having a 40°C kinematic viscosity of 20.00 mm²/s or less as the component (A). As described above, the weight average molecular weight (Mw) of the component (B) is 300 or more and 500,000 or less.

In the method, one or more of the above-mentioned other additives may be blended in addition to the component (B). The detailed description of the component (A), the component (B), and other additives is the same as that given hereinabove, and is omitted here.

### [Composition for refrigerator]

The composition for refrigerator of one aspect of the present invention contains a refrigerant and the above-mentioned refrigerator oil.

### <Refrigerant>

The refrigerant includes one or more selected from the group consisting of a fluorinated hydrocarbon and, as a natural refrigerant, a hydrocarbon-based refrigerant, carbon dioxide and ammonia.

In the composition for refrigerator, as for the use amounts of the refrigerant and the refrigerator oil, a mass ratio of the refrigerant to the refrigerator oil is in a range of preferably 99/1 to 10/90, and more preferably 95/5 to 30/70. When the mass ratio of refrigerant/refrigerator oil falls within the aforementioned range, refrigeration capability in a refrigerator system can be made appropriate.

### <Fluorinated Hydrocarbon Refrigerant>

The fluorinated hydrocarbon refrigerant includes a saturated fluorinated hydrocarbon compound (HFC) and an unsaturated fluorinated hydrocarbon compound (HFO).

The saturated fluorinated hydrocarbon compound is preferably a fluoride of an alkane having 1 to 4 carbon atoms, more preferably a fluoride of an alkane having 1 to 3 carbon atoms, and even more preferably a fluoride of an alkane having 1 to 2 carbon atoms (methane or ethane). Specifically, examples of the fluoride of methane or ethane include trifluoromethane (R23), difluoromethane (R32), 1,1-difluoroethane (R152a), 1,1,1-trifluoroethane (R143a), 1,1,2-trifluoroethane (R143), 1,1,1,2-tetrafluoroethane (R134a), 1,1,2,2-tetrafluoroethane (R134), and 1,1,1,2,2-pentafluoroethane (R125). Of those, difluoromethane and 1,1,1,2,2-pentafluoroethane are preferred.

Such a saturated fluorinated hydrocarbon compound may be used solely, or may be used in combination of two or more thereof. Examples of the case of using two or more of saturated fluorinated hydrocarbon compounds in combination include a mixed refrigerant of two or more of saturated fluorinated hydrocarbon compounds having 1 to 3 carbon atoms; and a mixed refrigerant of two or more of saturated fluorinated hydrocarbon compounds having 1 to 2 carbon atoms.

Specific examples of the mixed refrigerant include a mixture of R32 and R125 (R410A), a mixture of R125, R143a, and R134a (R404A), a mixture of R32, R125, and R134a (e.g., R407A, R407C, R407E), and a mixture of R125 and R143a (R507A).

Examples of the unsaturated fluorinated hydrocarbon compound include those having a carbon-carbon double bond, such as a fluoride of a chain olefin having 2 to 6 carbon atoms that is a straight-chain or branched, and a fluoride of a cyclic olefin having 4 to 6 carbon atoms.

More specifically, examples thereof include an ethylene having 1 to 3 fluorine atoms introduced thereinto, a propene having 1 to 5 fluorine atoms introduced thereinto, a butene having 1 to 7 fluorine atoms introduced thereinto, a pentene having 1 to 9 fluorine atoms introduced thereinto, a hexene having 1 to 11 fluorine atoms introduced thereinto, a cyclobutene having 1 to 5 fluorine atoms introduced thereinto, a cyclopentene having 1 to 7 fluorine atoms introduced thereinto, and a cyclohexene having 1 to 9 fluorine atoms introduced thereinto.

Of those unsaturated fluorinated hydrocarbon compounds, a fluoride of propene is preferred, a propene having 3 to 5 fluorine atoms introduced thereinto is more preferred, and a propene having 4 fluorine atoms introduced thereinto is still more preferred. Specifically, 1,3,3,3-tetrafluoropropene (HFO1234ze) and 2,3,3,3-tetrafluoropropene (HFO1234yf) are exemplified as a preferred compound.

Such an unsaturated fluorinated hydrocarbon compound may be used solely, or may be used in combination of two or more thereof, and it may be used in combination with other refrigerant than the unsaturated fluorinated hydrocarbon compound. Here, examples of the case of using a combination with other refrigerant than the unsaturated fluorinated hydrocarbon compound include a mixed refrigerant of a saturated fluorinated hydrocarbon compound and an unsaturated fluorinated hydrocarbon compound. Specific examples of the mixed refrigerant include a mixed refrigerant of R32, HFO1234ze, and R152a (such as AC5; a mixing ratio is 13.23/76.20/9.96).

### (Natural Refrigerant)

Examples of the natural refrigerant include a hydrocarbon-based refrigerant, carbon dioxide (carbonic acid gas), and ammonia, and a hydrocarbon-based refrigerant is preferred. Such a natural refrigerant may be used solely, or may be used in combination of two or more thereof, and it may be combined with any other refrigerant than the natural refrigerant. Here, examples of the case of using the natural refrigerant in combination with any other refrigerant than the natural refrigerant include a mixed refrigerant with one or more selected from the group consisting of a saturated fluorinated hydrocarbon compound and an unsaturated fluorinated hydrocarbon compound. Specific examples of the mixed refrigerant include a mixed refrigerant of carbon dioxide, HFO1234ze, and R134a (such as AC6; a mixing ratio is 5.15/79.02/15.41).

### [Hydrocarbon-based Refrigerant]

The hydrocarbon-based refrigerant is preferably a hydrocarbon having 1 or more and 8 or less carbon atoms, more preferably a hydrocarbon having 1 or more and 5 or less carbon atoms, even more preferably a hydrocarbon having 3 or more and 5 or less carbon atoms. When the carbon number is 8 or less, the boiling point of the refrigerant is not too high and the hydrocarbon of the type is preferred as a refrigerant. The hydrocarbon-based refrigerant includes one or more selected from the group consisting of methane, ethane, ethylene, propane (R290), cyclopropane, propylene, n-butane, isobutane (R600a), 2-methylbutane, n-pentane, isopentane, and cyclopentaneisobutane, and one alone of these may be used, or two or more thereof may be used in combination. As the hydrocarbon-based refrigerant, the above-mentioned hydrocarbon alone may be used singly, or as so mentioned above, a mixed refrigerant prepared by mixing the hydrocarbon with any other refrigerant than the hydrocarbon-based refrigerant, such as a hydrofluorocarbon, e.g., R134a, or ammonia or carbon dioxide may also be used.

As the refrigerant, among these, one or more selected from the group consisting of the hydrocarbon-based refrigerant, carbon dioxide and ammonia are preferred, the hydrocarbon-based refrigerant is more preferred, and propane (R290) or isobutane (R600a) is even more preferred.

The friction coefficient of the composition for refrigerator is preferably 0.350 or less, more preferably 0.320 or less, even more preferably 0.300 or less, still more preferably 0.280 or less, and further more preferably 0.260 or less. The value of the friction coefficient is a value measured according to the method described in the section of Examples given hereinunder.

### [Refrigerator System]

The refrigerator oil or the composition for refrigerator is used as filled inside a refrigerator system. The refrigerator system as referred to herein has a refrigeration cycle constituted of essential components including a compressor, a condenser, an expansion mechanism (e.g., an expansion valve), and an evaporator, or including a compressor, a condenser, an expansion mechanism, a dryer, and an evaporator. The refrigerator oil is one to be used for lubricating a sliding portion provided in, for example, a compressor.

The refrigerator oil and the composition for refrigerator can be used for, for example, various refrigerator systems, hot water systems, and heating systems, such as a car air conditioner, e.g., an open-type car air conditioner or an electric car air conditioner, or a gas heat pump (GHP), an air conditioner, a freezer, a refrigerator, an automatic vending machine, a showcase, a hot water supply machine, and a floor heater.

Among these, the refrigerator oil and the composition for refrigerator are favorably used as a refrigerator oil and a composition for refrigerator, for freezers and refrigerators, since the component (A) having a low viscosity is used and the component (B) is included, thereby providing a refrigerator oil and the refrigerator oil composition excellent in lubricity. In addition, the refrigerator oil is excellent in lubricity, especially in lubricity in a boundary lubrication condition though using a mineral oil having a low viscosity, and is therefore more favorably used as a refrigerator oil and a composition for refrigerator, for freezers and refrigerators using a hydrocarbon-based refrigerant.

### Examples

The present invention is hereunder more specifically described by reference to Examples, but it should be construed that the present invention is by no means limited by these Examples.

The properties of the constituent components, the refrigerator oil and the refrigerator oil composition were determined according to the following manners. [Kinematic viscosity (40°C kinematic viscosity, 100°C kinematic viscosity)]

The kinematic viscosity was measured at a different temperature using a glass-made capillary viscometer in conformity with JIS K2283:2000. [Weight average molecular weight (Mw) and number average molecular weight (Mn) of component (B)]

Using a gel permeation chromatography apparatus ("1260 Model HPLC" by Agilent Technologies Corporation), measurement was made under the condition mentioned below to determine standard polystyrene-equivalent values.

### (Measurement condition)

Columns: two columns of "Shodex KF402HQ" connected in series
Column temperature: 35°C
Detector: RI detector
Developing solvent: chloroform
Flow rate: 0.3 mL/min

### [Sulfur atom content]

Measured according to JIS K2541-6.

### [Pour point]

The pour point of the refrigerator oil obtained in Examples and Comparative Examples was measured according to JIS K 2269-1987.

### [JASO pendulum test: measurement of friction coefficient µ]

According to the "Soda pendulum test" defined in JASO-M314-88 and using a Soda pendulum tester Model (II), the friction coefficient µ was measured at an oil temperature of 50°C.

For the measurement, a refrigerant isobutane (R600a) was blown into 10 mL of the refrigerator oil obtained in Examples and Comparative Examples, at a flow rate of 5 L/hr.

The tester is for measuring the friction coefficient mainly in a boundary lubrication condition.

### [Examples 1 to 15, and Comparative Examples 1 and 2]

According to the compounding formulation in the following Tables 1 and 2, the component (B) shown in Tables 1 and 2 was blended in the component (A), mineral oil to prepare refrigerator oils of Examples and Comparative Examples containing the component (A) and the component (B). According to the above-mentioned evaluation methods, the refrigerator oils of Examples and Comparative Examples were evaluated. The results are shown in the following Tables 1 and 2.

The constituent components in the following Tables 1 and 2 are shown below.

### <Component (A) >

Mineral oil 1: mineral oil having a 40°C kinematic viscosity of 4.291 mm²/s and a sulfur content of 10 ppm by mass or less.

Mineral oil 2: mineral oil having a 40°C kinematic viscosity of 2.166 mm²/s and a sulfur content of 10 ppm by mass or less.

### <Component (B)>

Polymer 1: polyalkyl (meth)acrylate (PMA; weight average molecular weight (Mw): 26,000, number average molecular weight (Mn): 17,000)
Polymer 2: "VISCOBASE (registered trademark) 11-570" (trade name, by Evonik Industries AG, block copolymer of alkyl (meth)acrylate and 1-decene, weight average molecular weight (Mw): 10,000, number average molecular weight (Mn): 7,000)
Polymer 3: liquid polybutadiene "B-1000" (brand name, by Nippon Soda Co., Ltd., 1,2-polybutadiene homopolymer, weight average molecular weight (Mw): 1,400, number average molecular weight (Mn): 1,100)
Polymer 4: hydrogenated polybutadiene "BI-2000" (brand name, by Nippon Soda Co., Ltd., weight average molecular weight: 2,800, number average molecular weight (Mn): 2,100

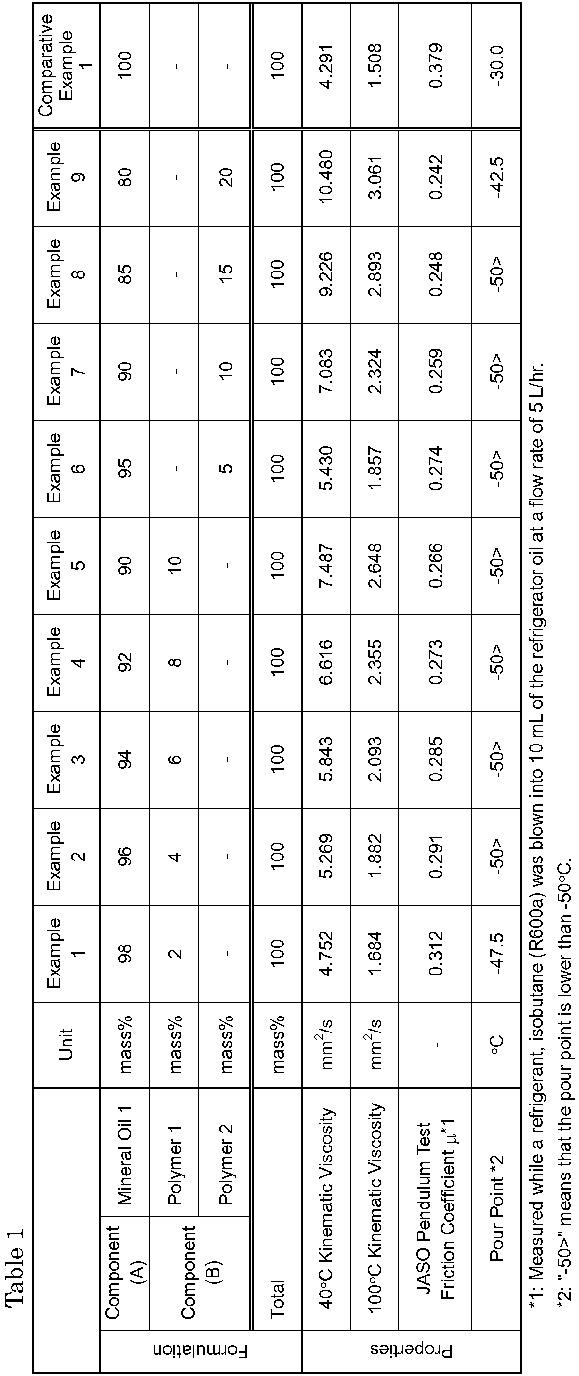

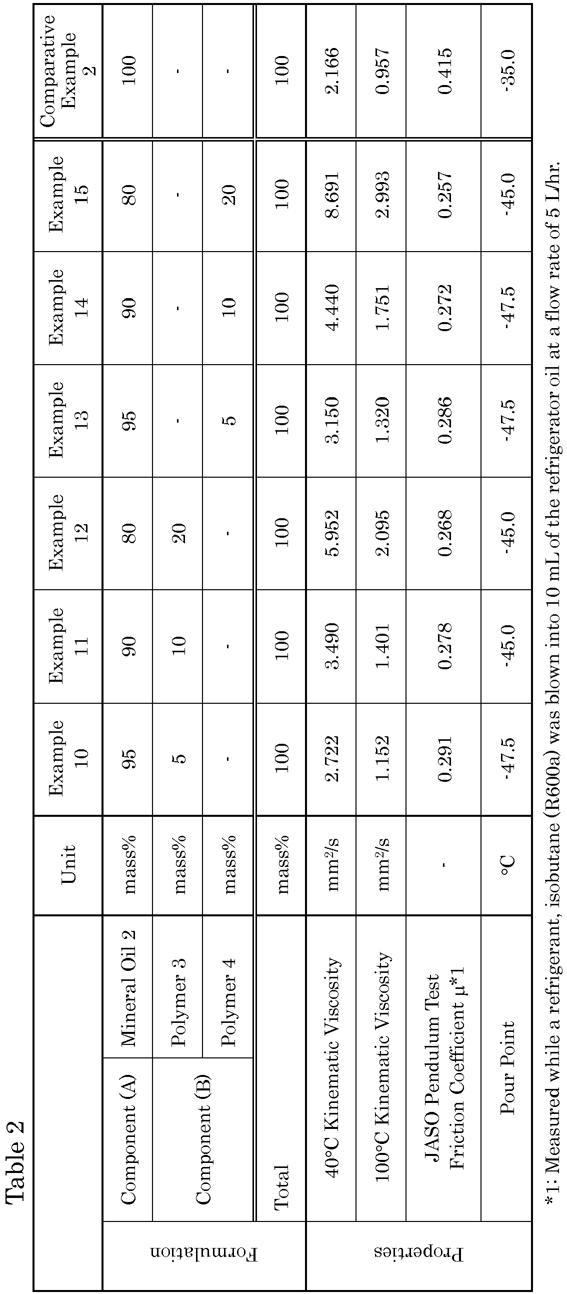

As obvious from the evaluation results in Tables 1 and 2, it is confirmed that the refrigerator oils of Examples 1 to 15 containing the component (B) have a lower friction coefficient µ in the JASO pendulum test than the refrigerator oils of Comparative Examples 1 and 2, and are excellent in lubricity, especially in lubricity in a boundary lubrication condition. Further, it is also confirmed that the refrigerator oils of Examples 1 to 15 have a lower pour point than the refrigerator oils of Comparative Examples 1 and 2.

### Industrial Applicability

The refrigerator oil is excellent in lubricity and is, for example, favorably used as a refrigerator oil to be blended in a composition for refrigerator, for use for freezers and refrigerators.

## Claims

1. A refrigerator oil comprising:
(A): a mineral oil having a kinematic viscosity at 40°C of 20.00 mm²/s or less, and
(B): one or more selected from the group consisting of a vinyl-based polymer, an olefin-based polymer, a diene-based polymer, and copolymers corresponding to these polymers, each having a weight average molecular weight (Mw) of 300 or more and 500,000 or less.

2. The refrigerator oil according to claim 1, wherein the vinyl-based polymer is one or more selected from the group consisting of a polymethacrylate-based polymer and a styrene-based polymer.

3. The refrigerator oil according to claim 1 or 2, wherein the content of the component (B) is 1% by mass or more and 50% by mass or less based on the total amount of the refrigerator oil.

4. The refrigerator oil according to any one of claims 1 to 3, wherein the kinematic viscosity at 40°C of the mineral oil is 0.10 mm²/s or more and 10.00 mm²/s or less.

5. The refrigerator oil according to any one of claims 1 to 4, which has a kinematic viscosity at 40°C of 0.40 mm²/s or more and 15.00 mm²/s or less.

6. The refrigerator oil according to any one of claims 1 to 5, which has a pour point of -37.5°C or lower.

7. The refrigerator oil according to any one of claims 1 to 6, which is to be used for freezers or refrigerators.

8. A composition for refrigerator comprising a refrigerant and the refrigerator oil of any one of claims 1 to 7.

9. The composition for refrigerator according to claim 8, wherein the refrigerant is a hydrocarbon-based refrigerant.

10. A method for producing a refrigerator oil, comprising blending at least:
(B) one or more selected from the group consisting of a vinyl-based polymer, an olefin-based polymer, a diene-based polymer, and copolymers corresponding to these polymers, each having a weight average molecular weight (Mw) of 300 or more and 500,000 or less, in
(A) a mineral oil having a 40°C kinematic viscosity of 20.00 mm²/s or less, so as to obtain a refrigerator oil.
